Europäisches Patentamt

European Patent Office

Office européen des brevets

(19)

(11) Numéro de publication : **0 634 107 A1**

(12)

# DEMANDE DE BREVET EUROPEEN

(21) Numéro de dépôt : **94401595.7**

(22) Date de dépôt : **11.07.94**

(51) Int. Cl.[6] : **A23L 1/105, A23L 1/238, A23L 1/185**

(30) Priorité : **12.07.93 FR 9308572**

(43) Date de publication de la demande :
**18.01.95 Bulletin 95/03**

(84) Etats contractants désignés :
**AT BE CH DE DK ES FR GB GR IE IT LI LU MC NL PT SE**

(71) Demandeur : **SOCIETE ANONYME GUYOMARC'H ALIMENTAIRE S.A.G.A.L.**
**Talhouet,**
**Saint Nolff**
**F-56250 Elven (FR)**

(72) Inventeur : **Nguyen, Tan Hung**
**18 Le Porlair**
**F-56890 Saint-Ave (FR)**
Inventeur : **Herve, Maryse**
**44 Ter, rue de la Motte-Brulon**
**F-35000 Rennes (FR)**

(74) Mandataire : **Warcoin, Jacques**
**Cabinet Régimbeau,**
**26, avenue Kléber**
**F-75116 Paris (FR)**

(54) **Ingrédients alimentaires obtenus par fermentation avec S. Boulardii et aliments les contenant.**

(57)    L'invention concerne des ingrédients alimentaires obtenus par fermentation des matières premières d'origine végétale avec la levure Saccharomyces boulardii et des aliments les contenant.

EP 0 634 107 A1

L'invention concerne des ingrédients alimentaires obtenus par fermentation avec la levure Saccharomyces boulardii et des aliments les contenant.

Les levures du genre Saccharomyces sont couramment utilisées dans de nombreuses industries agro-alimentaires.

Néanmoins, chaque industrie agro-alimentaire utilise des espèces de Saccharomyces de manière bien spécialisée pour la production d'aliments ou de boissons fermentés.

Ainsi, la boulangerie utilise S. cerevisiae.

S. cerevisiae, S. carlsbergensis ou S. uvarum sont des levures employées dans la production des bières. S. uvarum est aussi utilisée en cidrerie.

S. cerevisiae var. ellipsoideus, S. beticus et S. bayanus sont des levures bien connues pour la fermentation des vins.

S. rouxii est employée dans la fabrication de sauces de soja et aussi pour le miso de riz.

S. boulardii est une levure isolée à partir des fruits lychee d'Indochine dès les années 1920. Depuis 1962, S. boulardii est utilisée, en Europe et d'autres pays, comme médicament probiotique à effet antidiarrhéique chez l'homme. Ainsi S. boulardii forme le principe actif de la spécialité pharmaceutique Ultra-Levure, N.D. des Laboratoires Biocodex (92 126 - Montrouge, France).

Plusieurs brevets nous apprennent que S. boulardii est un médicament efficace contre certaines maladies de l'homme EP-A-0 149 579 et US 4 595 590 pour la colite pseudo-membraneuse, EP-A-0 195 870 et US 4 643 897 pour l'amibiase.

S. boulardii n'a jamais été utilisée dans la production d'aliments ou de boissons fermentés.

Or nous avons découvert que S. boulardii peut servir utilement à produire des aliments et des ingrédients alimentaires fermentés, par fermentation des matières premières végétales contenant des hydrates de carbone et des protéines.

Les exemples non limitatifs suivants vont illustrer l'invention.

Dans ces exemples, des aliments simples sont fermentés après avoir reçu un inoculum contenant S. boulardii. L'inoculum peut être produit selon toutes les techniques connues de culture de levures.

On peut, par exemple, produire l'inoculum de la façon suivante :

On introduit dans un flacon 500 ml d'un milieu de culture contenant 10g de malt, 1g de maltose, 1g d'extrait de levure du commerce (Bio Mérieux, 69260 Charbonnières-les-Bains, France), et 500 ml d'eau distillée. L'ensemble est stérilisé à 120°C pendant 10 minutes, après que le flacon soit fermé avec un bouchon traversé par deux pipettes Pasteur. Après refroidissement à la température ambiante, on ensemence le milieu avec $2.5 \times 10^9$ levures vivantes S. boulardii. L'une des deux pipettes Pasteur est reliée, par son extrémité extérieure, à un tuyau menant à une pompe d'aération, et barbotte, par son extrémité intérieure, dans le milieu de culture. L'autre pipette ne plonge pas dans le milieu de culture et permet l'évacuation des gaz. L'ensemble est ensuite placé dans une étuve à 37°C. Après 48 heures, la culture contenant S. boulardii est centrifugée à 4000 tours par minute pendant 5 minutes. Le surnageant est éliminé et le culot est repris dans 30ml d'eau distillée. Cette suspension constitue l'inoculum. La concentration de l'inoculum est en moyenne de $10^9$ levures par millilitre.

<div style="border:1px solid black; display:inline-block; padding:4px 20px;">EXEMPLE 1</div>

Dans un pétrin à parois thermostatées de 2 litres de contenance, on introduit les produits suivants :
- Blé cru broyé          1 kg
- Hydrolysat de protéine (Keramine A, ND de Bretagne Chimie Fine, 56140 - Pleucadeuc, France)    50 ml
- Glucose          100 g
- Eau          450 ml
- Inoculum          30 ml

On règle la température du pétrin à 37°C. On fait tourner le batteur du pétrin à 50 tours par minute, pendant 15 minutes toutes les heures. On ajoute de l'eau au cours de la fermentation afin de maintenir l'humidité relative au-dessus de 90 % (l'humidité relative est mesurée avec l'hygromètre Thermoconstanter, N.D. de Novasina A.G, Zurich, Suisse).

Après 48 heures de fermentation, on analyse les caractéristiques du blé fermenté selon les méthodes analytiques couramment utilisées dans la C.E.E. On compare le blé ainsi fermenté au blé cru d'origine et au blé cru mélangé avec les ingrédients tels que l'hydrolysat de protéine, le glucose, l'eau, dans les mêmes proportions que celles utilisées pour la fermentation.

Les résultats montrent que S. boulardii a modifié les caractéristiques organoleptiques, physiques et chimiques du blé après fermentation :

| | Blé cru d'origine | Blé cru + Ingrédients | Blé fermenté avec S. boulardii |
|---|---|---|---|
| Odeur de | Céréale | Céréale | Pain frais |
| pH (1g dans 10 ml d'eau déminéralisée) | 6,30 | 6,20 | 5,45 |
| Matière sèche(M.S.)(%) | 85.7 | 57.3 | 77.7 |
| Saccharose (% M.S.) | 1.2 | 1.4 | 0 |
| Protéines (% M.S.) | 13.6 | 13.7 | 15.0 |
| Levures vivantes/gM.S. | 0 | 0 | $3 \times 10^7$ |

EXEMPLE    2

Dans le même pétrin de l'Exemple 1, réglé à 37°C, on mélange les produits suivants :
- Tourteau de soja        1 kg
- Glucose        100 g
- Eau        300 ml
- Inoculum        30 ml

On fait tourner le batteur du pétrin à 50 tours par minute, pendant 15 minutes toutes les heures, pendant 36 heures.

On ajoute régulièrement de l'eau afin de maintenir l'humidité relative du mélange au taux voisin de 90 %.

Après 36 heures, les analyses montrent que la fermentation par S. boulardii a modifié les caractéristiques organoleptiques, physiques et chimiques du tourteau de soja:

| | Tourteau de soja d'origine | Tourteau de soja fermenté |
|---|---|---|
| Odeur de | Tourteau de soja | Pâtisserie levurée |
| pH (1g dans 10 ml d'eau deminéralisée) | 6.65 | 6.33 |
| Matière sèche(M.S.)(%) | 86.6 | 58.4 |
| Amidon (% M.S.) | 9.0 | 4.6 |
| Sucres totaux (% M.S.) | 10.2 | 2.6 |
| Saccharose (% M.S.) | 5.2 | 0 |
| Protéines (% M.S.) | 50.9 | 53.6 |
| Levures vivantes/g M.S. | 0 | $3.2 \times 10^7$ |

EXEMPLE    3

Dans le même pétrin des exemples précédents, réglé à 37°C, on mélange les produits suivants :
- Céréales (50 % blé / 50 % maïs) floconnées (flakes)        1 kg

3

- Hydrolysat de protéine (Kéramine A, N.D.)          50 ml
- Glucose          20 g
- Eau          400 ml
- Inoculum          30 ml

On fait tourner le batteur à 50 tours par minute pendant 15 minutes, toutes les heures, pendant 48 heures. On ajoute régulièrement de l'eau pour maintenir l'humidité relative à 90 %.

Après 48 heures, on constate, par analyses, que la fermentation avec S. boulardii a modifié les caractéristiques organoleptiques, physiques et chimiques des céréales floconnées :

|  | Céréales floconnées d'origine | Céréales floconnées fermentées |
|---|---|---|
| Odeur | Neutre | De pain frais |
| pH (1g dans 10 ml d'eau déminéralisée) | 6.60 | 6.00 |
| Matière sèche(M.S.)(%) | 88.7 | 60.0 |
| Protéines (% M.S.) | 13.0 | 15.1 |
| Saccharose (% M.S.) | 1.2 | 0 |
| Levures vivantes/g M.S. | 0 | $1.35 \times 10^8$ |

EXEMPLE   4

Dans le même pétrin des exemples précédents, thermostaté à 37 °C, on mélange les produits suivants :
- Pois broyé          500 g
- Glucose          10 g
- Extrait de levure (BioMérieux)          10 g
- Eau          150 ml
- Inoculum          20 ml

On fait tourner le batteur du pétrin à 50 tours par minute, pendant 15 minutes toutes les heures, pendant 30 heures.

On ajoute régulièrement de l'eau afin de maintenir l'humidité relative du mélange au taux voisin de 90 %.

Après la fermentation, les analyses montrent que S. boulardii a modifié les caractéristiques organoleptiques, physiques et chimiques du pois :

|  | Pois d'origine | Pois fermenté |
|---|---|---|
| Odeur | de fève | légèrement alcoolisée |
| pH (1g dans 10 ml d'eau déminéralisée) | 6.48 | 5.21 |
| Matière sèche(M.S.)(%) | 86.7 | 65.8 |
| Protéines (% M.S.) | 23.6 | 25.2 |
| Saccharose (% M.S.) | 2.2 | 0 |
| Levures vivantes/g M.S. | 0 | $2.29 \times 10^7$ |

EXEMPLE   5

Dans le même pétrin des exemples précédents, réglé à 37 °C, on mélange les produits suivants :

- Farine de manioc        500 g
- Glucose        10 g
- Extrait de levure (BioMérieux)        10 g
- Eau        300 ml
- Inoculum        30 ml

On fait tourner le batteur du pétrin à 50 tours par minute, pendant 15 minutes toutes les heures, pendant 46 heures.

On ajoute régulièrement de l'eau pour maintenir l'humidité relative du mélange au taux voisin de 90 %.

Après fermentation, les analyses montrent que S. boulardii a modifié les caractéristiques organoleptiques, physiques et chimiques du manioc :

|  | Manioc d'origine | Manioc fermenté |
|---|---|---|
| Odeur | neutre | Acide |
| pH (1g dans 10 ml d'eau déminéralisée) | 6.40 | 4.60 |
| Matière sèche(M.S.)(%) | 86.6 | 55.7 |
| Protéines (% M.S.) | 2.1 | 3.2 |
| Levures vivantes/g M.S. | 0 | $1.1 \times 10^8$ |

## Revendications

1.  Ingrédients alimentaires caractérisés en ce qu'ils sont obtenus par fermentation avec Saccharomyces boulardii.

2.  Ingrédients alimentaires fermentés selon la revendication 1, caractérisé en ce que les matières premières utilisées sont d'origine végétale.

3.  Ingrédients alimentaires fermentés selon l'une des revendications 1 et 2, caractérisés en ce que les matières premières utilisées contiennent des hydrates de carbone et des protéines.

4.  Aliments pour animaux contenant des ingrédients selon l'une des revendications 1, 2 et 3.

5.  Aliments pour animaux contenant S.boulardii.

6.  Aliments pour les humains contenant des ingrédients selon l'une des revendications 1, 2 et 3.

7.  Aliments pour les humains contenant S. boulardii.

Office européen
des brevets

**RAPPORT DE RECHERCHE EUROPEENNE**

Numero de la demande

EP 94 40 1595

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 195 870 (LABORATOIRES BIOCODEX)<br>--- | | A23L1/105<br>A23L1/238<br>A23L1/185 |
| A,D | EP-A-0 149 579 (LABORATOIRES BIOCODEX)<br>--- | | |
| A | CHEMICAL ABSTRACTS, vol. 101, no. 13,<br>24 Septembre 1984, Columbus, Ohio, US;<br>abstract no. 108910q,<br>M.I. DEMANCILHA<br>page 499 ;colonne R ;<br>& FOOD CHEMISTRY,<br>vol.14, no.4, 1984<br>pages 313 - 318<br>* abrégé *<br>--- | | |
| A | FR-A-2 372 777 (OMNIUM D'ASSAINISSEMENT)<br>--- | | |
| A | FR-A-2 299 293 (F. CAMUS)<br>----- | | |

| DOMAINES TECHNIQUES RECHERCHES (Int.Cl.6) |
|---|
| A23L |

Le présent rapport a été établi pour toutes les revendications

| Lieu de la recherche | Date d'achèvement de la recherche | Examinateur |
|---|---|---|
| BERLIN | 26 Septembre 1994 | Alvarez Alvarez, C |